# EUROPEAN PATENT APPLICATION

(11) **EP 2 227 033 A2**
(43) Date of publication of application: **08.09.2010**
(21) Application number: 10155587.8
(22) Date of filing: 05.03.2010
(51) Int. Cl.: H04Q 9/00

(54) **Wireless communication system for managing an underground facility**

(30) Priority: 06.03.2009 KR 20090019222
(71) Applicant: Korea Electronics Technology Institute, Bundang-gu, Seongnam-si Gyeonggi-do 463-816 (KR)
(72) Inventor: Won, Yun-Jae, Sanghyeon-dong, Suji-gu, Yongin-si, Gyeonggi-do (KR); Lim, Seung-Ok, Bundang-gu, Seongnam-si, Gyeonggi-do (KR); Kim, Sun-Hee, Seoul (KR); Cho, Jin-Woong, Seoul (KR)
(74) Representative: Vossius & Partner

(57) **Abstract**

This invention relates to a wireless communication system for managing an underground facility, and more particularly, to a wireless communication system for managing an underground facility capable of providing status information of the underground facilities through accurate measurements in harsh underground environments for a wireless communication.

A wireless communication system for managing an underground facility of the present invention is comprising: a plurality of sensor nodes attached to the underground facilities transmitting sensing signals via magnetic field communication after detecting the status information of the underground facilities according to the driving signal which includes a wahe-up signal; and an information collection device transmitting the driving signals to the sensor nodes, collecting the sensing signals transmitted from the sensor nodes, and transmitting the collected information to the monitoring system via short-range wireless communication. (Fig. 3)

## Description

This invention relates to a wireless communication system for managing an underground facility, and more particularly, to a wireless communication system for managing an underground facility capable of providing status information of the underground facilities through accurate measurements in harsh underground environments for a wireless communication.

Magnetic field communication is a wireless communication method which utilizes magnetic field inside of a region which is defined by the distance from the antenna, which is λ/2π, where the electromagnetic field begins to separate from the antenna, and starts to propagate into the free space as an electromagnetic wave. Magnetic field communication works reliably in a harsh environment containing metals, water, soil, or debris of collapsed buildings.

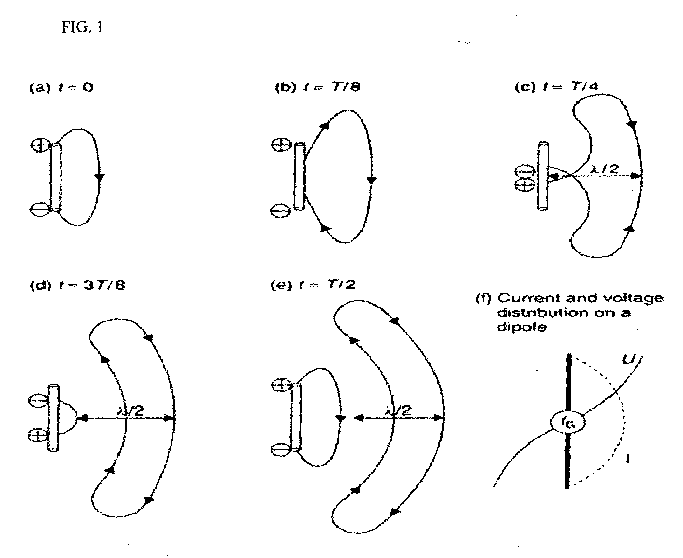

FIG. 1 is a schematic diagram illustrating generation of a magnetic field region which is utilized in a magnetic field communication. When an AC voltage is applied between the feed points of a dipole antenna, an electric field is generated causing an AC current flow in the antenna, and thereby a magnetic field is generated. An electromagnetic field is separated from the antenna at the distance d, which is λ/2π, and transmitted into the free space. At this time, a transmitting unit transmits a data signal via the magnetic field which is modulated using method such as ASK or BPSK, and a receiving unit receives the data signal transmitted via magnetic field from the transmitting unit, and demodulates the data signal using ASK or BPSK method to obtain the original data.

Magnetic field communication enables a reliable wireless communication near water, soil, or metal; magnetic field communication is highly accepted as an essential wireless communication technology to overcome the limitation of the RFID/USN technologies.

Conventional RFID/USN technologies suffer communication difficulties due to severe interferences in a harsh environment near water, soil, or metal. Table 1 shows a comparison between the magnetic field communication and other short-range wireless communications.

**TABLE 1**

| A comparison of short-range wireless communication technologies | | | | | |
|---|---|---|---|---|---|
| Standard | | ZigBee 802.15.4 | RFID | IEEE P1902.1 | Magnetic field communication |
| Application | | Monitor/Control | Tracking | Visibility | Monitor/Control |
| Memory | | 4-32KB | 0.1KB | 10KB | over 10KB |
| Battery Life (days) | | 10∼100 | NA | 3,000 | 3,000∼4,000 |
| Bandwidth (Kb/s) | | 20∼150 | 1∼100 | 1 | 8 |
| Harsh Environment (steet/liquid/underground/etc.) | | × | Δ (125KHz) | ○ | ○ |
| Range (m) | | 1∼100 | 0.5∼5 | 1∼10 | 1∼15 |
| Anti-collision | PHY | × | × | ○ | ○ |
| | MAC | ○ | (not effective) | × | ○ |
| Networking | | Mesh | × | × | Ad-hoc |

Lifelines such as water supply lines, sewerages, power lines, gas pipes, communication lines, oil pipes, heat pipes are major underground facilities and these are usually buried underground for protection and aesthetic purposes.

But it is very difficult to determine the state of these underground facilities accurately due to their buried structure. It is very important to check the conditions of those facilities constantly because the impact will be enormous if an accident happens in one of the above mentioned lifelines.

For this reason, methods of collecting status information of the underground facilities on the ground using multiple sensors, attached to the underground facilities, capable of sensing the conditions thereof are being studied. However, the sensing signals detected by the sensors cannot be transmitted to the ground surface using conventional communication methods utilizing RFID/USN technologies.

The present invention is provided to solve the problems discussed above, and an objective of this invention is to provide a wireless communication system for managing an underground facility which is capable of collecting status information of the underground facility in a harsh environment through a magnetic field communication between the sensor node attached to the facility buried underground and the information collection device located on the ground surface.

Another objective of this invention is to provide a wireless communication system for managing an underground facility which can be operated semi-permanently without replacing the battery because the driving power supply of the sensor node can be charged using the magnetic field communication signal transmitted from the information collection device.

Yet another objective of this invention is to provide a wireless communication system for managing an underground facility which enables position based monitoring of the underground facility using the distance information between the information collection device and the sensor node, together with the GPS position information of the information collection device.

A wireless communication system for managing an underground facility in accordance with one exemplary embodiment of the present invention is comprising: a plurality of sensor nodes attached to the underground facilities transmitting sensing signals via magnetic field communication, after detecting the status information of the underground facilities according to the driving signal which includes a wake-up signal; and an information collection device transmitting the driving signals to the sensor nodes, collecting the sensing signals transmitted from the sensor nodes, and transmitting the collected information to the monitoring system via short-range wireless communication.

The driving signal in accordance with the specific features of the present invention is comprised of a wake-up signal and a charging signal of the sensor node, and each signal has a predetermined period. When the wake-up signal is received, the sensor node wakes up from the idle mode and detects condition of the underground facility and transmits the status data to the information collection device. Soon after the completion of the status data transmission, the sensor node enters again into the idle mode so as to reduce the power consumption. During the idle mode, the battery in the sensor node, which is being used as a driving power supply, is charged through the charging unit using the charging signal which is received during the charging signal period of the driving signal.

The sensor node is comprised of: a sensor which outputs a sensing signal by detecting the condition of the underground facility responding to the wake-up signal which is included in the driving signal; a communication unit which transmits and receives data with the information collection device via magnetic field communication; a charging unit to charge the battery during the charging signal period which is included in the driving signal transmitted from the information collection device; and a control unit to transmit a sensing signal, which is detected by the sensor during the wake-up signal period of the driving signal, to the information collection device, and to transmit a control signal to charge the battery through the charging unit during the charging signal period.

The information collection device is comprised of: a magnetic field communication unit to transmit the driving signal to the sensor node via magnetic field communication, and to receive the sensing signal which is transmitted from the sensor node; a short-range communication unit for data communication with the monitoring system via short-range wireless communication; a memory to store the sensing signals collected by the information collection device for each sensor node; and a controller unit to transmit the driving signal carrying the wake-up signal to the sensor node through the magnetic field communication unit in accordance with the sensing schedule of the sensor node, and to transmit collected sensing signals, that are received from the magnetic field communication unit, to the monitoring system through the short-range communication unit.

The information collection device according to an additional feature of the present invention may calculate the distance between the corresponding sensor node and the information collection device by analyzing the signal strength of the sensing signal for each sensor node, and transmit this information with the sensing signal to the monitoring system.

The information collection device according to another additional feature of the present invention may further comprise a GPS receiver unit to calculate and transmit the position information of the corresponding information collection device by receiving the GPS signal transmitted from a GPS satellite; by transmitting the present position information, calculated by the GPS receiver unit, together with the sensing signals to the monitoring system, a position-based management of underground facilities can be realized.

Since magnetic field communication uses low frequencies unlike high frequency RF or UHF RFID, it has very sensitive field attenuation characteristics, and is much less sensitive to the nearby obstacles such as soil and water. Therefore, highly accurate distance measurement can be obtained by using a magnetic field communication.

A wireless communication system for managing an underground facility of the present invention can readily collect and monitor the status information of the underground facilities in harsh environments by using the magnetic field communication between the sensor nodes attached to the underground facilities and the information collection device located on the ground surface.

A wireless communication system for managing an underground facility of the present invention can be operated semi-permanently without battery replacement by using the battery in the sensor node as a driving power supply, and charging the battery using the magnetic field communication signal transmitted from the information collection device.

A wireless communication system for managing an underground facility of the present invention can provide a position based monitoring of the underground facilities by calculating relatively accurate distance between the information collection device and the sensor node through the signal strength analysis of the magnetic field communication, and using the GPS position information.

### BRIEF DESCRIPTION OF DRAWINGS

FIG. 1 is a schematic diagram illustrating generation of a magnetic field region which is utilized in a magnetic field communication
FIG. 2 is a schematic diagram illustrating a wireless communication system for managing an underground facility in accordance with a preferred exemplary embodiment of the present invention.
FIG. 3 is a block diagram of a sensor node in accordance with a preferred exemplary embodiment of the present invention.
FIG. 4 is a block diagram of an information collection device in accordance with a preferred exemplary embodiment of the present invention.

### DESCRIPTION OF EMBODIMENTS

Above described and additional features of the present invention will become more apparent from the preferred embodiments described in detail with reference to the accompanying drawings. For a more complete understanding and reproducibility of the present invention for those skilled in the art, preferred embodiments will now be described in detail hereinafter.

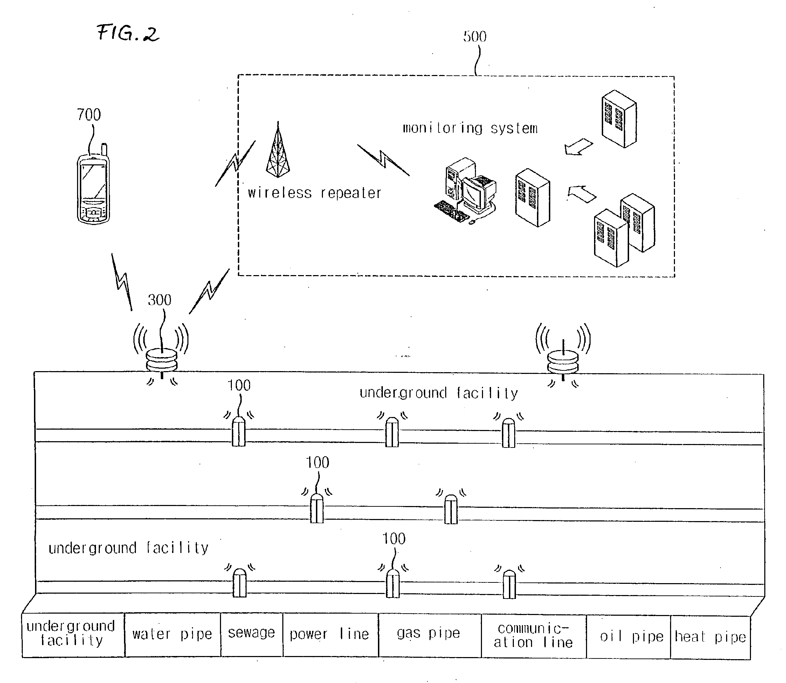

FIG. 2 is a schematic diagram illustrating a wireless communication system for managing an underground facility in accordance with a preferred exemplary embodiment of the present invention.

A wireless communication system for managing an underground facility in accordance with one exemplary embodiment of the present invention is comprising: a plurality of sensor nodes 100 attached to the underground facilities transmitting sensing signals via magnetic field communication after detecting the status information of the underground facilities according to the driving signal which includes a wake-up signal; an information collection device 300 transmitting the driving signals to the sensor nodes 100, collecting the sensing signals transmitted from the sensor nodes 100, and transmitting the collected information via short-range wireless communication; a monitoring system 500 to receive and analyze the sensing signals transmitted from the information collection device 300 and store, manage, and provide the results of the analysis; and a mobile terminal 700, carried by a field manager, to receive the sensing signals transmitted from the information collection device 300, and provide the status information of the underground facilities

A wireless communication system for managing an underground facility may further include a wireless repeater to transmit the collected sensing signals transmitted from the information collection device 300 via short-range wireless communication, to a monitoring system 500 in a remote location.

A monitoring system 500 can be connected to the above mentioned wireless repeater via the internet and comprised of: a web service server which provides web service using a computer connected via the internet; a database server which stores the status information detected for each underground facility and the result of the analysis; and an analysis server to analyze the sensing signal for each underground facility and store the analysis result to the database server, or provide the analysis result using a display device.

A mobile terminal 700 can be realized by a PDA or something like a mobile communication terminal, and receives and analyze the sensing signals transmitted from the information collection device 300, and provides present status information of each underground facility in accordance with the analysis result. Such mobile terminal 700 is carried by the field manager and when the mobile terminal 700 is entered within the service range of the sensing signal of the information collection device 300, the sensing signals transmitted from the information collection device 300 are received and analyzed to provide the result using a display device thereby the field manager can easily monitor the conditions of the underground facilities.

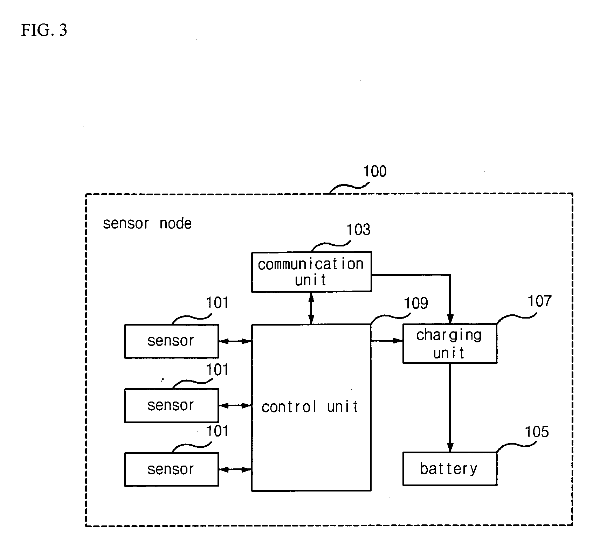

Sensor nodes 100 are attached and buried underground together with the facilities such as water pipes, sewages, power lines, gas pipes, communication lines, oil pipes, and heat pipes; the sensor nodes 100 detect the conditions such as temperature, humidity, pressure, and cracks of the corresponding underground facilities and transmit the status information to the information collection device 300 via magnetic field communication. At this time a sensing signal is transmitted together with identification information to identify corresponding sensor node 100. This sensor node 100 will be described more in detail in conjunction with the FIG. 3.

FIG. 3 is a block diagram of a sensor node in accordance with a preferred exemplary embodiment of the present invention. As shown in FIG. 3, a sensor node 100 of the present invention is comprised of: a sensor 101 to generate a sensing signal by detecting the condition of a underground facility responding to a wake-up signal which is included in the driving signal; a communication unit 103 for data communication with the information collection device 300 via magnetic field communication; a charging unit 107 to charge a battery 105 during the charging signal period which is included in the driving signal transmitted from the information collection device 300; and a control unit 109 to transmit the sensing signal, detected by the sensor 101 responding to the wake-up signal in the driving signal transmitted from the information collection device 300 in accordance with the wake-up period of the driving signal, to the information collection device 300 via magnetic field communication, and generate a control signal to charge the battery 105 through the charging unit 107 in accordance with the charging period.

According to the specific features of the present invention, the driving signal which is transmitted to each sensor node 100 by the information collection device 300 includes a wake-up signal and a charging signal, and each of the wake-up signal and the charging signal may have a predetermined period; wherein the charging period of the driving signal is comprised of the period of the driving signal excluding the period of the wake-up signal.

For example, the information collection device 300 continuously transmits a driving signal to the sensor node 100, but a driving signal carrying a wake-up signal is transmitted when the time to check the condition of the underground facility arrives. During the time when there is no need to check the condition of the underground facility, the sensor node 100 operates in a standby mode performing minimum functions to reduce power consumption until it receives a wake-up signal.

Although a sensor 101 which can measure temperature, humidity, pressure, cracks of the underground facility is enough for most purposes, a more sophisticate sensor 101 which can measure various conditions of the underground facility other than the parameters described above may be used. A sensor node 100 may be comprised of multiple sensors instead of one sensor 101.

A communication unit 103 can be realized using a magnetic field communication modem which communicates data with the information collection device 300 via magnetic field communication, and receives and generates the driving signal transmitted from the information collection device 300, and transmits the sensing signal detected by the sensor 101 to the information device 300.

A charging unit 107 can be realized by a compact battery charger to charge the battery 105 with the power generated from electrostatic induction of the driving signal received from the communication unit 103 in accordance with the charging period of the driving signal. The driving signal is an electromagnetic wave transmitted from the information collection device 300, therefore when this electromagnetic wave is received by the antenna of the communication unit 103, then a current starts to flow across the antenna due to the electrostatic induction and this current is rectified by the charging unit 107 and charges the battery 105.

The power of the battery 105 charged by the charging unit 107 is used by the sensor 101 for checking the condition of the underground facility responding to the wake-up signal of the driving signal, and for transmitting the sensing signal reflecting the detected condition to the information collection device 300 via magnetic field communication.

A control unit 109 can be realized, for example, by using a microprocessor for an arithmetic operation and a micro-controller whose peripheral circuits are monolithically integrated into a single chip, and controls the operation of each element of the sensor node 100 in response to the wake-up signal transmitted from the information collection device 300.

The control unit 109 transmits control signal to each part of the sensor node 100 in idle mode forcing them to drive when a driving signal carrying a wake-up signal is received.

When a sensing signal reflecting temperature, humidity, pressure, and crack level is transmitted from the sensor 101, the control unit 109 transmits corresponding sensing signal, carrying its unique identification information, to the communication unit 103, then the communication unit 103 transmits corresponding sensing signal to the information collection device 300 via magnetic field communication.

Once the transmission of the sensing signal is completed, the control unit 109 transmits control signal to each part of the sensor node 100 to stop its operation and put them into the idle mode again. At this time, the charging unit 107 charges the battery 105 with the power generated by electrostatic induction of the charging signal received in accordance with the driving signal which includes the charging signal controlled by the control signal of the control unit 109.

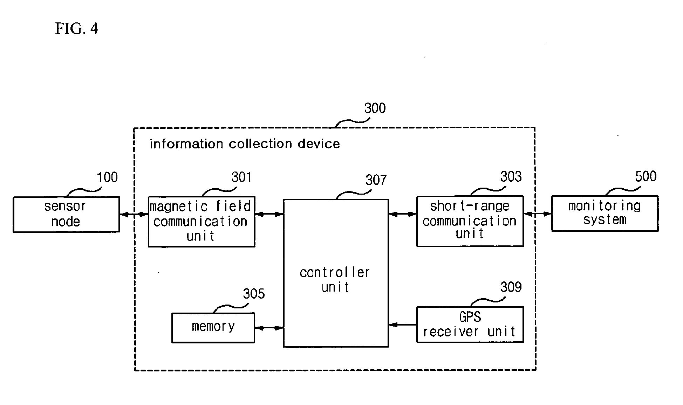

An information collection device 300, installed on the ground surface, continuously transmits a wake-up signal and a driving signal which carries a charging signal to the multiple sensor nodes 100, and collects sensing signals transmitted from the individual sensor nodes 100 via magnetic field communication, and transmits the collected sensing signals via short-range wireless communication. Such an information collection device 300 can be embodied as a compact transceiver type, and more preferably, as a half-buried type structure. This information collection device 300 will be described more in detail in conjunction with the FIG. 4 hereinafter.

FIG. 4 is a block diagram of an information collection device in accordance with a preferred exemplary embodiment of the present invention. As shown in FIG. 4, the information collection device 300 of the present invention is comprised of: a magnetic field communication unit 301 which transmits a driving signal to a sensor node 100 via magnetic field communication, and receives a sensing signal transmitted from the sensor node 100; a short-range communication unit 303 which performs data communication with a monitoring system 500 via short-range wireless communication; a memory 305 which stores sensing signal of each sensor node 100 collected by the information collection device 300; and a controller unit 307 which incorporates a wake-up signal into the driving signal in accordance with the sensing schedule of the sensor node 100, and transmits this driving signal to the sensor node 100 through the magnetic field communication unit 301, and collects the sensing signal received from the magnetic field communication unit 301, and transmits this sensing signal to the monitoring system 500 through the short-range communication unit 303.

The magnetic field communication unit 301 performs data communication with the sensor node 100 via magnetic field communication, and transmits the driving signal, which includes a wake-up signal and a charging signal in accordance with the control signal of the controller unit 307, to the sensor node 100 which is buried underground, and transmits the sensing signals received from the multiple sensor nodes 100.

The short-range communication unit 303 performs data communication with the monitoring system 500 or a mobile terminal 700 using the short-range wireless communication protocols such as Bluetooth and Zigbee, and transmits sensing signals of the individual sensor nodes 100 collected by the magnetic field communication unit 301 to the monitoring system 500 or the mobile terminal 700. The short-range communication unit 303 receives the control signal transmitted from the monitoring system 500 or the mobile terminal 700 and transmits the control signal to the controller unit 307.

The memory 305 can be realized by, for example, a readable and writable memory such as an EEPROM or a flash memory, and stores sensing signals of the individual sensor nodes 100 received through the magnetic field communication unit 301. Access of these sensing signals of the individual sensor nodes 100 stored in the memory 305 are controlled by the controller unit 307.

The controller unit 307, like the control unit 109 of the sensor node 100, can be realized by using a microprocessor for an arithmetic operation and a micro-controller whose peripheral circuits are monolithically integrated into a single chip, and generates and transmits a driving signal carrying a wake-up signal in accordance with a sensing schedule of an underground facility. The controller unit 307 receives the sensing signal transmitted from the magnetic field communication unit 301 and stores the sensing signal corresponding to each sensor node 100 into the memory 305, and transmits this sensing signal corresponding to each sensor node 100 to the monitoring system 500 or the mobile terminal 700 through the short-range communication unit 303. At this time, if the distance between the information collection device 300 and the monitoring system 500 is too far for an adequate short-range wireless communication, a wireless repeater which is connected to the monitoring system 500 can be further installed.

According to the additional feature of the present invention, the information collection device 300 of the present invention calculates the distance between the information collection device 300 and the sensor node 100 by detecting the sensing signal, i.e. the magnetic field strength, transmitted from the sensor node 100, and transmits this calculated distance information together with the collected sensing signal to the monitoring system 500 or the mobile terminal 700.

The controller unit 307 calculates the distance between the information collection device 300 and the sensor node 100 by measuring the strength of the sensing signal corresponding to each sensor node 100 transmitted from the magnetic field communication unit 301, and transmits this distance information together with the sensing signal to the monitoring system 500.

As described above, the strength variation with respect to distance for a magnetic field communication is much larger than the other types of short-range wireless communication, and this fact implies that the distance between the transmitting unit and receiving unit can be measured more accurately in a magnetic field communication system due to its large strength variation with respect to distance. Pre-measured distance data with respect to the underground signal strength of the magnetic field communication is stored in the memory 305 of the information collection device 300, then the controller unit 307 can calculate the distance between the information collection device 300 and the sensor node 100 by measuring the strength of the sensing signal, i.e. the magnetic field strength, received through the magnetic field communication unit 301, and comparing this with the stored distance data in the memory 305. This calculated distance information is included in the sensing information and transmitted to the monitoring system 500 or the mobile terminal 700.

According to the additional feature of the present invention, the information collection device 300 of the present invention further includes a GPS receiver unit 309 which calculates and outputs the position of the corresponding information collection device 300 by receiving a GPS signal transmitted from a GPS satellite, and the controller unit 307 transmits present position information calculated by the GPS receiver unit 309 together with the sensing signal.

The GPS receiver unit 309 calculates the position information of the information collection device 300 by receiving the GPS signal transmitted from the GPS satellite, and transmits this calculated position information to the controller unit 307. Since a position calculation method using a GPS signal is widely known nowadays, the detailed description of the method will be omitted. The controller unit 307 incorporates the position information of the information collection device 300, which is calculated by the GPS receiver unit 309, into the sensing signal corresponding to each individual sensor node 100, and transmits this sensing signal via magnetic field communication.

By receiving the position information of the information collection device 300 transmitted through the information collection device 300, the distance information between the information collection device 300 and the sensor node 100, and the status information of the underground facilities, and using the monitoring system 500 or a mobile terminal 700, the conditions of the corresponding underground facilities can be effectively managed, and also a position-based management of the underground facilities becomes possible.

For example, various parameters such as the slope and the degree of bending of a water pipe for each water pipe position can be calculated using the position information of the information collection device 300 and the distance information between the information collection device 300 and the sensor node 100, and when these parameters are transformed into an image, the manager of the monitoring system 500 can visually examine the underground facilities.

## Claims

1. A wireless communication system for managing an underground facility comprising:
at least one sensor node attached to the underground facility transmitting a sensing signal via magnetic field communication after detecting the status information of the underground facility in accordance with a driving signal which includes a wake-up signal; and
an information collection device transmitting the driving signal to the sensor node, collecting the sensing signal transmitted from the sensor node, and transmitting the collected information to a monitoring system via short-range wireless communication.

2. The wireless communication system for managing an underground facility according to claim 1,
wherein the driving signal includes period of the wake-up signal and a charging signal for the sensor node.

3. The wireless communication system for managing an underground facility according to claim 2,
wherein the sensor node further comprises;
a sensor outputting a sensing signal by detecting the condition of the underground facility responding to the wake-up signal which is included in the driving signal;
a communication unit transmitting and receiving data with the information collection device via magnetic field communication;
a charging unit charging the battery during the charging signal period which is included in the driving signal transmitted from the information collection device; and
a control unit transmitting a sensing signal, which is detected by the sensor during the wake-up signal period of the driving signal, to the information collection device, and transmitting a control signal to charge the battery through the charging unit during the charging signal period.

4. The wireless communication system for managing an underground facility according to claim 3,
wherein the information collection device comprises;
a magnetic field communication unit transmitting the driving signal to the sensor node via magnetic field communication, and receiving the sensing signal which is transmitted from the sensor node;
a short-range communication unit for data communication with the monitoring system via short-range wireless communication;
a memory storing the sensing signals collected by the information collection device for each sensor node; and
a controller unit transmitting the driving signal carrying the wake-up signal to the sensor node through the magnetic field communication unit in accordance with the sensing schedule of the sensor node, and transmitting the collected sensing signal, that is received from the magnetic field communication unit, to the monitoring system through the short-range communication unit.

5. The wireless communication system for managing an underground facility according to claim 4,
wherein the controller unit calculates the distance between the information collection device and the sensor node by analyzing the sensing signal corresponding to each sensor node transmitted from the magnetic field communication unit, and transmits this distance information together with the sensing signal to the monitoring system.

6. The wireless communication system for managing an underground facility according to claim 5,
wherein the controller unit utilizes signal transmitted from the sensor node via magnetic field communication in calculation of the distance between the sensor node and the information collection device.

7. The wireless communication system for managing an underground facility according to any of claims 1 to 6,
wherein the information collection device further comprises a GPS receiver unit which calculates and outputs the position of the corresponding information collection device by receiving a GPS signal transmitted from a GPS satellite.

8. The wireless communication system for managing an underground facility according to any of claims 5 to 7,
wherein the controller unit transmits present position information calculated by the GPS receiver unit together with the sensing signal.

9. The wireless communication system for managing an underground facility according to claim 8, further comprising a mobile terminal which receives the sensing signal transmitted from the information collection device via short-range wireless communication and displays the sensing result on it.

10. A sensor node, attached to an underground facility, transmitting a sensing signal via magnetic field communication by detecting status information of the underground facility in accordance with a driving signal which carries a wake-up signal and a charging signal, and comprising:
a sensor which transmits the sensing signal by detecting status information of the underground facility in accordance with the wake-up signal;
a communication unit performing data communication via magnetic field communication;
a charging unit charging a battery by receiving the charging signal which is incorporated in the driving signal transmitted from an information collection device; and
a control unit transmitting the sensing signal, detected by the sensor in accordance with the wake-up signal of the driving signal transmitted from the information collection device in accordance with the wake-up period of the driving signal, to the information collection device via magnetic field communication, and transmitting a control signal for charging the battery through the charging unit in accordance with the charging period.

11. An information collection device transmitting a driving signal which includes a wake-up signal and a charging signal to at least one sensor node which is attached to an underground facility and transmits a sensing signal via magnetic field communication by detecting the condition of the underground facility, collecting the sensing signal transmitted from the sensor node, transmitting the collected sensing signal via short-range wireless communication, and comprising:
a magnetic field communication unit transmitting the driving signal to the sensor node via magnetic field communication, and receiving the sensing signal transmitted from the sensor node;
a short-range communication unit performing data communication with a monitoring system via short-range communication;
a memory storing the sensing signal of the corresponding sensor node collected by the information collection device; and
a controller unit generating the driving signal in accordance with the sensing schedule of the sensing node, transmitting the driving signal to the sensing node from the magnetic field communication unit, collecting the sensing signal received from the magnetic field communication unit, and transmitting the collected sensing signal to the controller unit through the short-range wireless communication unit.

12. The information collection device according to claim 11,
wherein the controller calculates the distance information between the sensor node and the information collection device by analyzing the sensing signal corresponding each sensor node transmitted from the magnetic field communication unit, and transmits this distance information together with the sensing signal.

13. The information collection device according to claim 12,
wherein the controller unit utilizes signal transmitted from the sensor node via magnetic field communication in calculation of the distance between the sensor node and the information collection device.

14. The information collection device according to any of claims 11 to 13,
wherein the information collection device further comprises a GPS receiver unit calculating the position of the information collection device itself by receiving a GPS signal transmitted by a GPS satellite.

15. The information collection device according to claim 14,
wherein the controller unit transmits the present position information calculated by the GPS receiver unit together with the sensing signal.
